# EUROPEAN PATENT SPECIFICATION

(11) **EP 3 569 333 B1**
(45) Date of publication and mention of the grant of the patent: **31.03.2021**
(21) Application number: 19169432.2
(22) Date of filing: 16.04.2019
(51) Int. Cl.: B22F 3/105, B33Y 10/00, B33Y 30/00, B29C 64/153, B29C 64/35, B33Y 40/00

(54) **A METHOD OF REMOVING CONSOLIDATED POWDER FROM AN ADDITIVE LAYER MANUFACTURED COMPONENT**
VERFAHREN ZUR ENTFERNUNG VON KONSOLIDIERTEM PULVER VON EINEM ADDITIV GEFERTIGTEN BAUTEIL
PROCÉDÉ D'EXTRACTION DE CONSOLIDATION EN POUDRE D'UN COMPOSANT FABRIQUÉ DE MANIÈRE ADDITIVE

(30) Priority: 17.05.2018 GB 201808039
(43) Date of publication of application: 20.11.2019
(73) Proprietor: Rolls-Royce plc, London N1 9FX (GB)
(72) Inventor: Chir, Adam, Derby, Derbyshire DE24 8BJ (GB)
(74) Representative: Rolls-Royce plc

(56) References cited:
- WO-A1-94/12284
- US-A- 5 775 402
- US-A- 5 876 550
- US-A1- 2015 197 862
- US-A1- 2015 217 367

## Description

### Field of the Disclosure

The present disclosure relates to a method of removing unconsolidated powder from an additive layer manufactured component and particularly, but not exclusively, to a method of removing unconsolidated powder from an additive layer manufactured component for a gas turbine engine.

### Background to the Disclosure

Additive Layer Manufacturing (ALM) refers to processes used to create a three-dimensional object in which layers of material are formed under computer control to create an object.

Powder bed deposition is a subset of ALM processes whereby a layer of powder particles is deposited and rastered with a localised, controllable energy source to melt and fuse a proportion of the powder particles to form a region of continuous solid material in the desired areas corresponding to the two-dimensional profile of the three-dimensional final object. Successive layers are deposited with the layer height being determined by the process control system. The residual unmelted powder remains in a semi-compacted and/or sintered state. As successive layers of powder are fused a three-dimensional component is formed.

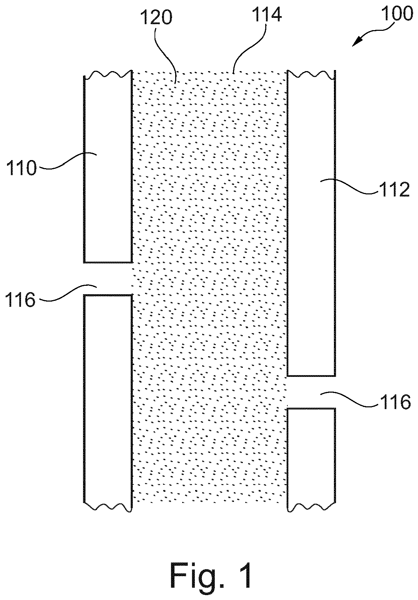

ALM techniques are increasingly used to manufacture components having complex features from which it can be difficult to extract the unmelted powder. An example of this is shown in Figure 1 in which

During the manufacturing process, the powder that is not consolidated by the power source can become compacted and immobile in these complex features. To ensure the desired functionality of these features is achieved this immobilised powder must be removed.

It is known to attempt the removal of this immobilised powder using vibration, or by immersion in an ultrasonic bath. Such techniques can be time consuming and not entirely effective.

Alternatively, the immobilised powder may be loosened and extracted using implements inserted into passageways or the injection of a high-pressure fluid. However, these alternatives can be mechanically damaging to interior features of the component.

Prior art techniques for the removal of powder may be successful in instances where there is line of sight from an external surface through a feature. However, for component geometries where this is not possible (e.g. dual wall cooling features) immobilised powder can remain entrapped within the feature. Vibration is often not able to dislodge this partially compacted powder. This residual powder can become sintered to the component after heat treatment, thereby leading to deterioration in the performance of the component, or risk of contamination when sintered powder is released during operation of the component.

WO 94/12284 A1 discloses a technique for removing loose powder from the interior surfaces of ceramic moulds made using layer manufacturing processes, such as three dimensional printing processes. The interior of the mould can be filled with liquid, such as water, which is boiled by applying microwave energy of a frequency selected to heat the liquid. The particles are entrained in the flow caused by the boiling liquid. Alternatively, fine particles are introduced into the mould and the mould is agitated to dislodge the particles and the powder so that they can be poured out of the mould. Such technique tends also to remove the surface finish of the mould. Any of the particles which remain can be dissolved in a liquid and removed in the liquid from the mould. Further, the surface finish of the mould can be improved by casting a slip of fine particles onto the surface to form a generally level, and preferably non-conformal, coating on the surfaces.

### Statements of Disclosure

According to a first aspect of the present disclosure there is provided a method of removing unconsolidated powder from an additive layer manufactured component, the component having a first wall portion and a second wall portion, and a volume defined between the first and second wall portions, the volume containing unconsolidated powder material, the method comprising the steps of:
(i) using an additive layer manufacturing process to form the component;
(ii) saturating the unconsolidated powder material with water;
(iii) reducing the temperature of the saturated unconsolidated powder material to a temperature below the freezing temperature of the water;
(iv) allowing the water to freeze;
(v) increasing the temperature of the saturated unconsolidated powder material to a temperature above the melting temperature of the water; and
(vi) removing the unconsolidated powder material from the volume.

The method of the present disclosure involves dislodging compacted powder in constrained passages using the dipolar nature of certain elements.

The present disclosure involves the introduction of water whose volume increases upon reduction of the temperature of the fluid to below its solidification temperature. This dipolar fluid is introduced to the feature containing the compacted powder so that it penetrates into the compacted powder to fill the voids.

The term dipolar fluid is used this disclosure to refer to a molecular structure in which, even though the total charge on the molecule is zero, the nature of the chemical bonds is such that the positive and negative charges do not completely overlap in most of the molecules. Consequently, such molecules are said to be polar because they possess a permanent dipole moment.

The component now containing unconsolidated powder saturated with the fluid is placed in an environment, such as a refrigerator, to reduce the temperature of the fluid to below its solidification or freezing temperature.

As the fluid cools and forms a solid, it will increase in volume and separate the individual powder particles thereby loosening the entrapped unconsolidated powder. The component is then increased in temperature by placing the component in to an oven. The component is then placed on to a vibratory plate to allow powder to escape from the feature of concern.

This method of the present disclosure enables entrapped unconsolidated powder to be reliably removed from ALM components having more complex geometries. By being able to reliably remove entrapped unconsolidated powder from these more complicated geometries, the performance of the component can be improved. For example, components having complex internal cooling air channels can be produced with the internal features free from entrapped unconsolidated powder, which increase cooling efficiency.

Optionally, step (ii) comprises the step of:
(ii)' immersing the component in a fluid bath, the fluid bath comprising water.

In one arrangement of the disclosure, the water may be introduced to the internal volume of the component by immersing the component in to a bath of water.

In another arrangement, the component may be drenched in water by, for example, a fluid jet.

Optionally, at least one of the first and second wall portions comprises an aperture therethrough, and step (vi) comprises the step of:
(vi)' removing the unconsolidated powder material from the volume through the aperture.

By providing the geometry of the component with an aperture through at least one of the first and second wall portion, the method can include the removal of the frozen and thawed unconsolidated powder material from the volume through the aperture. This can improve the efficiency of the method in extracting the unconsolidated powder material from the volume.

Optionally, step (v) comprises the step of:
(v) increasing the temperature of the saturated unconsolidated powder material to a temperature above the melting temperature of the water, by the application of a heating process selected from the group comprising radiative heating, resistive heating, and microwave heating.

The temperature of the component now containing the frozen unconsolidated powder material may be increased by placing the component into an oven.

In an alternative arrangement, the step of heating the component to return the water to a liquid state may utilise, for example, a radiative heating element, an electric resistive heating, or a blow torch.

In a further alternative arrangement, the water may be allowed to return to its liquid state without any specific heating equipment but simply by being allowed to reach ambient temperature.

Optionally, step (vi) comprises the step of:
(vi)" removing the unconsolidated powder material from the volume, by the application of a process selected from the group comprising placing on a vibratory plate, pressure washing, ultrasonic bath immersion, and acoustic energy application.

In one arrangement of the disclosure, the unconsolidated powder material removal step may be conducted by high-pressure washing or ultrasonic bath.

The fluid used to break up compacted powder may be any material whose crystal structure is larger when solid than liquid.

According to a second aspect of the present disclosure, not forming part of the claimed invention, there is provided a computer program that, when read by a computer, causes performance of the method of the first aspect.

According to a third aspect of the present disclosure, not forming part of the claimed invention, there is provided a non-transitory computer readable storage medium comprising computer readable instructions that, when read by a computer, causes performance of the method of the first aspect.

According to a fourth aspect of the present disclosure, not forming part of the claimed invention, there is provided a signal comprising computer readable instructions that, when read by a computer, causes performance of the method of the first aspect.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic part-sectional view of an additive layer manufactured component having an internal volume containing unconsolidated powder material; and
Figure 2 shows a schematic view of the method according to an embodiment of the disclosure.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

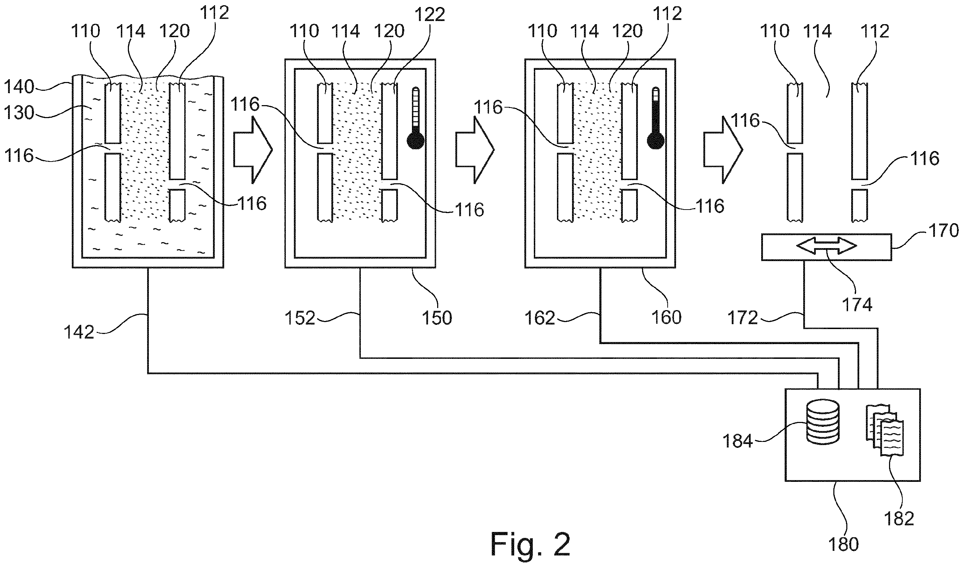

Referring to Figures 1 and 2, an additive layer manufactured component containing unconsolidated powder material corresponding to a first embodiment of the disclosure is designated generally by the reference numeral 100.

The component 100 has a first wall portion 110 and a second wall portion 112. The arrangement of the first and second wall portions 110, 112 defines an internal volume 114 therebetween.

Each of the first wall portion 110 and the second wall portion 112 includes an aperture 116. For example, the component 100 may be a turbine blade or combustor for a gas turbine engine with the apertures 116 being cooling holes allowing for the passage of cooling air from an internal volume 114 to an exterior of the component 100.

The internal volume 114 is filled with unconsolidated powder material 120 that is a consequence of the additive layer manufacturing process. This unconsolidated powder material 120 must be removed from the internal volume 114 before the component 100 can be considered complete.

In the method of the present disclosure, the component 100 along with the unconsolidated powder material 120 is immersed in a fluid bath 140, comprising water

Once the water 130 has penetrated the entire volume 114, the component 100 is placed into a refrigerator unit 150 in order to reduce the temperature of the water 130 to a temperature lower than its freezing point. In alternative arrangements, the cooling of the component may be achieved by, for example, the use of liquid nitrogen or other cryogenic fluid.

When the water 130 has frozen, its increase in volume causes the unconsolidated powder material 120 to become loosened.

The component 100 together with the frozen water 130 is then warmed up using a heating oven 160. The component 100 is heated to a temperature greater than the freezing point of water 130.

The component 100 is then placed onto a vibratory plate 170 providing, for example, a lateral vibratory motion 174. The vibratory action of the vibratory plate 170 causes the now loosened unconsolidated powder material 120 to flow out of the apertures 116.

Once all of the unconsolidated powder material 120 has been removed from the internal volume 114, the component 100 is ready for use.

In the present example shown in the figures, the above-mentioned process is controlled by a computer 180. Specifically, a computer program 182 is stored on a computer readable storage medium 184. When the computer program 182 runs on the computer 180, the method of the present disclosure is controlled.

In one or more examples, the operations described may be implemented in hardware, software, firmware, or any combination thereof. If implemented in software, the operations may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

Various examples have been described. These and other examples are within the scope of the following claims.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A method of removing unconsolidated powder from an additive layer manufactured component (100), the component (100) having a first wall portion (110) and a second wall portion (112), and a volume (114) defined between the first and second wall portions (110:112), the volume (114) containing unconsolidated powder material (120), the method comprising the steps of:
(i) using an additive layer manufacturing process to form the component (100);
(ii) saturating the unconsolidated powder material (120) with water (130);
(iii) reducing the temperature of the saturated unconsolidated powder material to a temperature below the freezing temperature of the water (130);
(iv) allowing the water (130) to freeze;
(v) increasing the temperature of the saturated unconsolidated powder material to a temperature above the melting temperature of the water (130); and
(vi) removing the unconsolidated powder material (120) from the volume (114).

2. The method as claimed in Claim 1, wherein step (ii) comprises the step of:
(ii)' immersing the component (100) in a fluid bath (140), the fluid bath (140) comprising water (130).

3. The method as claimed in Claim 1 or Claim 2, wherein at least one of the first and second wall portions (110:112) comprises an aperture (116) therethrough, and step (vi) comprises the step of:
(vi)' removing the unconsolidated powder material (120) from the volume (114) through the aperture (116).

4. The method as claimed in any one of Claims 1 to 3, wherein step (v) comprises the step of:
(v)' increasing the temperature of the saturated unconsolidated powder material to a temperature above the melting temperature of the water (130), by the application of a heating process selected from the group comprising radiative heating, resistive heating, and microwave heating.

5. The method as claimed in any one of Claims 1 to 4, wherein step (vi) comprises the step of:
(vi)" removing the unconsolidated powder material (120) from the volume (114), by the application of a process selected from the group comprising placing on a vibratory plate, pressure washing, ultrasonic bath immersion, and acoustic energy application.

## Patentansprüche

1. Verfahren zum Entfernen von nicht verfestigtem Pulver von einem mittels additiver Fertigung hergestellten Bauteil (100), wobei das Bauteil (100) einen ersten Wandabschnitt (110) und einen zweiten Wandabschnitt (112) aufweist sowie ein Volumen (114), das zwischen dem ersten und dem zweiten Wandabschnitt (110:112) definiert ist, wobei das Volumen (114) nicht verfestigtes Pulvermaterial (120) enthält, wobei das Verfahren folgendes umfasst:
(i) Verwenden eines additiven Fertigungsprozesses, um das Bauteil (100) zu bilden;
(ii) Sättigen des nicht verfestigten Pulvermaterials (120) mit Wasser (130);
(iii) Senken der Temperatur des gesättigten, nicht verfestigten Pulvermaterials auf eine Temperatur unterhalb der Gefriertemperatur des Wassers (130);
(iv) Gefrieren lassen des Wassers (130);
(v) Erhöhen der Temperatur des gesättigten, nicht verfestigten Pulvermaterials auf eine Temperatur oberhalb der Schmelztemperatur des Wassers (130); und
(vi) Entfernen des nicht verfestigten Pulvermaterials (120) aus dem Volumen (114).

2. Verfahren nach Anspruch 1, wobei der Schritt (ii) den folgenden Schritt umfasst:
(ii)' Eintauchen des Bauteils (100) in ein Fluidbad (140), wobei das Fluidbad (140) Wasser (130) umfasst.

3. Verfahren nach Anspruch 1 oder Anspruch 2, wobei mindestens ein Abschnitt des ersten und des zweiten Wandabschnitts (110:112) eine Öffnung (116) dort hindurch umfasst, und wobei der Schritt (vi) den folgenden Schritt umfasst:
(vi)' Entfernen des nicht verfestigten Pulvermaterials (120) durch die Öffnung (116) aus dem Volumen (114).

4. Verfahren nach einem der Ansprüche 1 bis 3, wobei der Schritt (v) den folgenden Schritt umfasst:
(v)' Erhöhen der Temperatur des gesättigten, nicht verfestigten Pulvermaterials auf eine Temperatur oberhalb der Schmelztemperatur des Wassers (130) unter Anwendung eines Erhitzungsprozesses, der ausgewählt ist aus der Gruppe, die Strahlungserhitzung, Widerstandserhitzung und Mikrowellenerhitzung umfasst.

5. Verfahren nach einem der Ansprüche 1 bis 4, wobei der Schritt (vi) den folgenden Schritt umfasst:
(vi)" Entfernen des nicht verfestigten Pulvermaterials (120) aus dem Volumen (114) unter Anwendung eines Prozesses, der ausgewählt ist aus der Gruppe, die folgendes umfasst: Platzieren auf einer Rüttelplatte, Hochdruckwäsche, Eintauchen in ein Ultraschallbad und Anwendung von Schallenergie.

## Revendications

1. Procédé d'extraction de poudre non consolidée d'un composant (100) fabriqué de manière additive, le composant (100) ayant une première partie de paroi (110) et une seconde partie de paroi (112), et un volume (114) défini entre les première et seconde parties de paroi (110:112), le volume (114) contenant une matière en poudre non consolidée (120), le procédé comprenant les étapes consistant à :
(i) utiliser un procédé de fabrication additive pour former le composant (100) ;
(ii) saturer la matière en poudre non consolidée (120) avec de l'eau (130) ;
(iii) réduire la température de la matière en poudre non consolidée saturée à une température inférieure à la température de congélation de l'eau (130) ;
(iv) laisser l'eau (130) geler ;
(v) augmenter la température de la matière en poudre non consolidée saturée à une température supérieure à la température de fusion de l'eau (130) ; et
(vi) extraire la matière en poudre non consolidée (120) du volume (114).

2. Procédé selon la revendication 1, l'étape (ii) comprenant l'étape consistant à :
(ii)' immerger le composant (100) dans un bain de fluide (140), le bain de fluide (140) comprenant de l'eau (130).

3. Procédé selon la revendication 1 ou 2, au moins l'une des première et seconde parties de paroi (110:112) comprenant une ouverture (116) au travers, et l'étape (vi) comprenant l'étape consistant à :
(vi)' extraire la matière en poudre non consolidée (120) du volume (114) à travers l'ouverture (116).

4. Procédé selon l'une quelconque des revendications 1 à 3, l'étape (v) comprenant l'étape consistant à :
(v)' augmenter la température de la matière en poudre non consolidée saturée à une température supérieure à la température de fusion de l'eau (130), par l'application d'un procédé de chauffage choisi dans le groupe comprenant le chauffage radiatif, le chauffage par résistance et le chauffage par micro-ondes.

5. Procédé selon l'une quelconque des revendications 1 à 4, l'étape (vi) comprenant l'étape consistant à :
(vi)" extraire la matière en poudre non consolidée (120) du volume (114), par l'application d'un procédé choisi dans le groupe comprenant le placement sur une plaque vibrante, le lavage sous pression, l'immersion dans un bain ultrasonique et l'application d'énergie acoustique.
